# EUROPEAN PATENT APPLICATION

(11) **EP 3 454 576 A1**
(43) Date of publication of application: **13.03.2019**
(21) Application number: 18193059.5
(22) Date of filing: 06.09.2018
(51) Int. Cl.: H04R 29/00, H04S 7/00

(54) **CALIBRATION OF IN-WALL SPEAKERS**

(30) Priority: 06.09.2017 US 201762554788 P
(71) Applicant: Sonavox Canada Inc., Woodbridge, Ontario L4H 4E3 (CA)
(72) Inventor: The designation of the inventor has not yet been filed
(74) Representative: Bingham, Ian Mark

(57) **Abstract**

A method for calibrating an in-wall speaker includes determining a resonant frequency of speaker when the speaker is installed in a wall and using the resonant frequency to apply an equalization to the speaker to match a designed reference response. The method may be implemented by a device, such as an audio component, a wireless mobile device, or both.

## Description

### BACKGROUND

In-room calibration of a loudspeaker may use a first measurement in the nearfield of the loudspeaker followed by a second measurement at the listener location. The nearfield response is mostly independent of the room in which the loudspeaker is located. In fact, many speakers are measured at low frequency using nearfield during design. Equalization may be applied to the loudspeaker to adjust the second measurement to match the first. Because microphone characteristics are generally unchanged between the two measurements, such characteristics become immaterial to the process. Hence, in-room calibration seeks to minimize the difference between the two measurements.

This process has the advantage that the response at the listening location becomes the response that the designer intended for the listener. In fact, it is generally required that the nearfield response is the known intended performance for the loudspeaker.

### SUMMARY

According to one aspect of the present invention, a method for calibrating an in-wall speaker includes determining a resonant frequency of speaker when the speaker is installed in a wall and using the resonant frequency to apply an equalization to the speaker to match a designed reference response.

The method may be implemented by a device, such as an audio component, a wireless mobile device, or both.

The determining may include measuring a voltage and current applied to the speaker versus frequency, and taking a frequency of minimum current draw as the resonant frequency.

The method may further include driving the speaker using a constant current and measuring a nearfield response of the speaker while the speaker is driven under the constant current. The determining may include taking a peak value of the nearfield response as the resonant frequency.

The driving of the speaker using a constant current may include applying a signal to the speaker via a resistor.

The method may further include measuring a nearfield response with and without a resistor in series with the speaker and using a difference between measurements with and without the resistor to determine a peak value of the nearfield response to be the resonant frequency.

The method may further include using a lookup table to correlate resonant frequency to frequency response.

The method may further include performing an in-room calibration correct for influence in a room defined by the wall.

### BRIEF DESCRIPTION OF THE DRAWINGS

FIG. 1 is an exploded perspective diagram of an in-wall speaker.
FIG. 2 is a perspective diagram of a room containing an installed in-wall speaker.
FIG. 3 is a flowchart of a method of calibrating an in-wall speaker using a resonant frequency.
FIG. 4 is a flowchart of a method of calibrating an in-wall speaker using a frequency of minimum current draw as a resonant frequency.
FIG. 5 is a flowchart of a method of calibrating an in-wall speaker using a peak of a nearfield response as a resonant frequency.
FIG. 6 is a schematic diagram of a controllable series resistor.
FIG. 7 is a flowchart of a method of calibrating an in-wall speaker using a peak of a nearfield response as determined with a series resistor.
FIG. 8 graph of measured response of an in-wall speaker with and without a series resistor.
FIG. 9 is a schematic diagram of an in-wall speaker and wireless mobile device.
FIG. 10 is a flowchart of a method of calibrating an in-wall speaker with room correction.

### DESCRIPTION

The nearfield response of an in-wall loudspeaker is generally unknown, as the loudspeaker is designed and constructed separately from the design and construction of the wall. The loudspeaker may be, for example, a subwoofer. A low-frequency response of the loudspeaker is strongly influenced by the rear loading of the driver, which may be governed by the enclosed air volume defined by the wall space. Because this volume is not generally known and is subject to substantial uncertainty even when nominally known, the low frequency response cannot be known other than by measurement using a properly calibrated microphone. A properly calibrated microphone adds complexity to the calibration process, and the techniques discussed herein aim to eliminate the need for such a microphone.

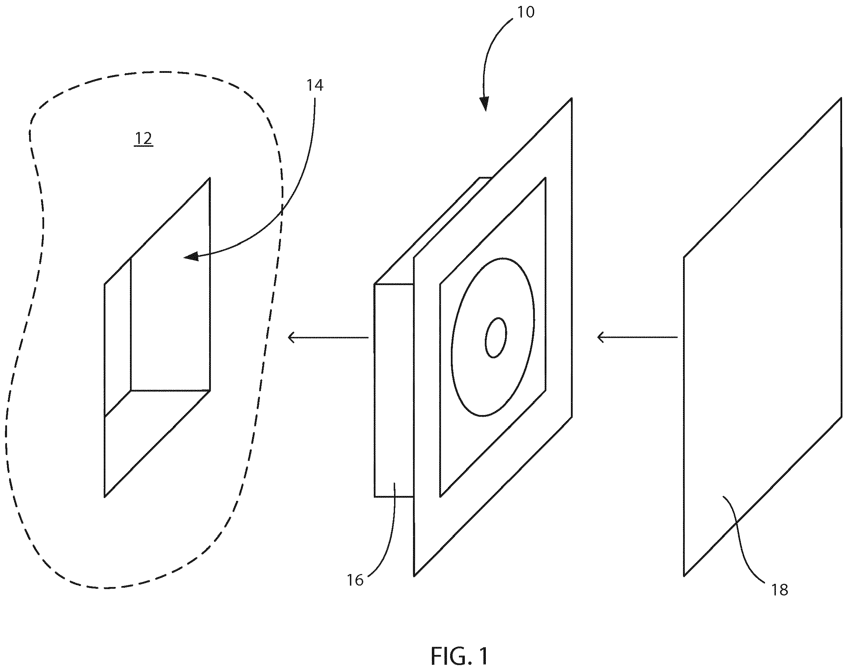

FIG. 1 shows an in-wall speaker 10 to be situated in a cavity 14 within a wall 12. When installed, a body 16 of the loudspeaker 10, which includes the driver, is located within the cavity 14. A cover 18 may be installed over the loudspeaker 10 to help conceal the speaker 10 within the wall 12.

The volume of air in the wall cavity 14 changes the response of the in-wall speaker 10 by adding effective stiffness to the driver thereby raising the speaker's fundamental resonant frequency. Because the low-frequency response of the loudspeaker 10 is defined and predictable if the electromechanical properties of the loudspeaker 10 are known, it is possible to calculate the low-frequency response to very high accuracy without needing to make an acoustic measurement.

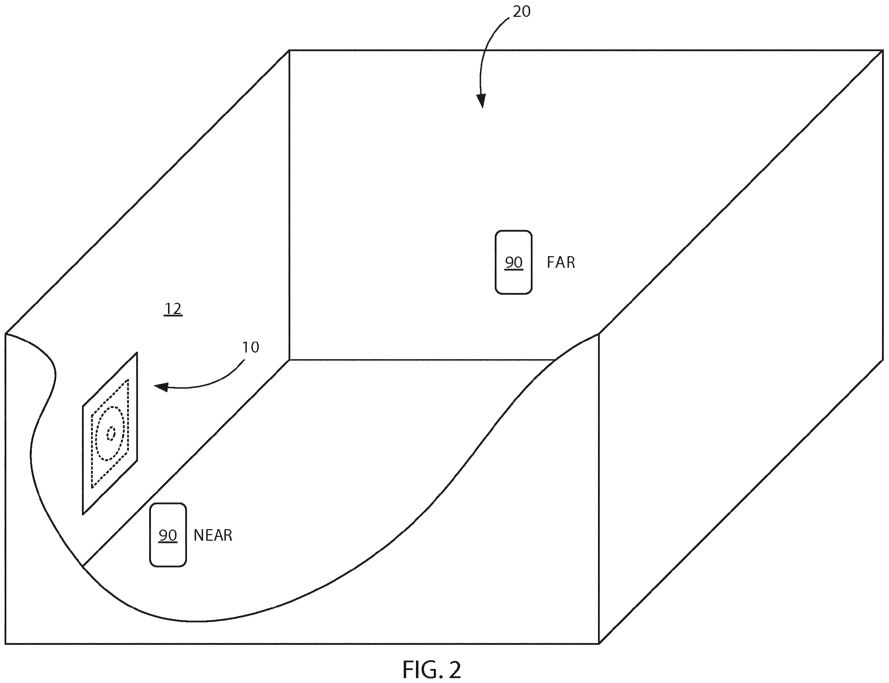

The added stiffness of the volume of air in the cavity 14 changes the resonant frequency. As such, if this frequency can be determined, the as-installed frequency response can be readily calculated. This calculated data can then be used to adjust the performance to match a designed reference response. Once this is done, in-room calibration can be performed to correct for the influence in the room 20 that the wall 12 forms a part, as shown in FIG. 2.

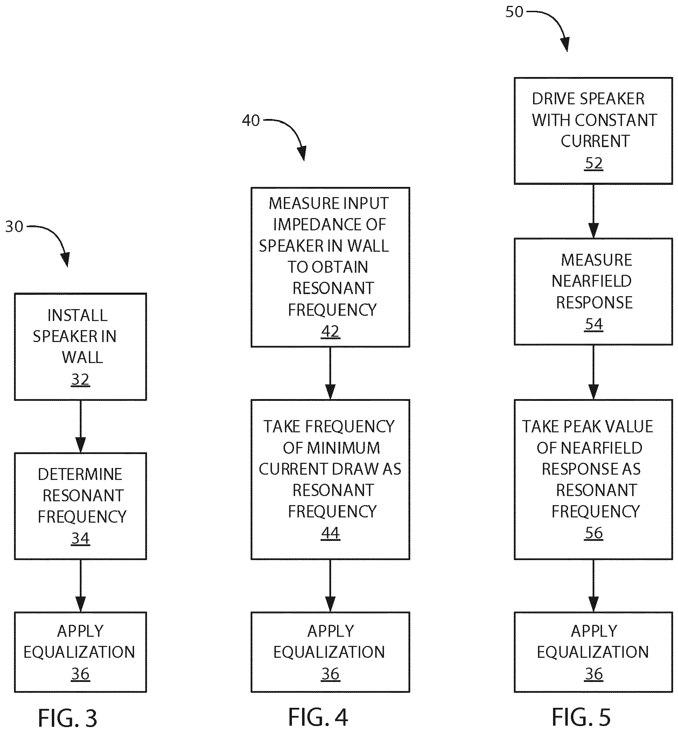

FIG. 3 shows a method 30 of calibrating an in-wall speaker using a resonant frequency. At block 32, a speaker 10 is installed in a cavity 14 of a wall 12. At block 34, a resonant frequency of the speaker 10 is determined after the speaker 10 is installed in the wall 12. Next, at block 36, the resonant frequency is used to apply an equalization to the speaker 10 to match a designed reference response.

Resonant frequency may be correlated to frequency response, such that the determined resonant frequency can be used to obtain the frequency response, at block 36. As such, the equalization can be applied to force the loudspeaker 10 to have the desired reference frequency response. A lookup table, function or algorithm may be used to correlate resonant frequency to frequency response.

FIG. 4 shows a method 40 of calibrating an in-wall speaker using a frequency of minimum current draw as a resonant frequency. The method 40 is similar to the other methods described herein and the related description may be referenced, with like numerals denoting like components. Redundant description is omitted for sake of clarity.

A resonant frequency of a speaker 10 is determined, at block 42, by measuring an input impedance of the speaker 10 when the speaker 10 is installed in a cavity 14 of a wall 12. For example, by measuring both the applied voltage and current versus frequency, the frequency of minimum current draw is taken as the resonant frequency, at block 44. Then, at block 36, the resonant frequency is used to apply an equalization to the speaker 10 to match a designed reference response.

FIG. 5 shows a method 50 of calibrating an in-wall speaker using a peak of a nearfield response as a resonant frequency. The method 50 is similar to the other methods described herein and the related description may be referenced, with like numerals denoting like components. Redundant description is omitted for sake of clarity.

At block 52, after a speaker 10 is installed in a cavity 14 of a wall 12, the speaker 10 is driven using a constant current or a close approximation to constant current. At block 54, a nearfield response of the speaker 10 is measured while the speaker 10 is driven under the constant current. A device having a microphone may be used to measure the nearfield response.

Under the condition of constant current drive, the response of the loudspeaker 10 is altered such that it has a very high output level at the resonant frequency compared to other frequencies. The nearfield response may be analyzed to obtain a peak value. At block 56, the resonant frequency may be determined by taking the peak value of the nearfield response as the resonant frequency. Then, at block 36, the resonant frequency is used to apply an equalization to the speaker 10 to match a designed reference response.

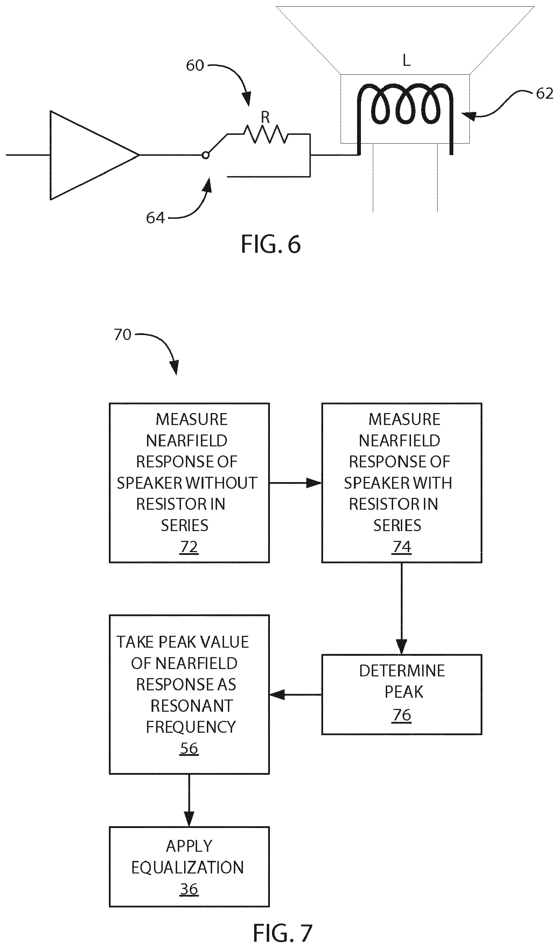

Approximating constant current drive may be performed by applying a signal to the loudspeaker 10 via a resistor, as shown in FIG. 6. Such as resistor 60 may have approximately 10 times the resistance of the loudspeaker voice coil 62 and may be controllably placed in series with the voice coil 62. A switch 64 may be used to selectively place the resistor 60 in series with the voice coil 62. This approach has the advantage of not requiring circuitry to monitor current.

Although the nearfield response is mostly independent of room interaction, it is not completely independent. Therefore, the nearfield response may contain some irregularities that limit the accuracy of determining the frequency at which the peak value occurs. Accordingly, two measurements are made with the measuring microphone in the same nearfield position, one with the resistor and one without.

FIG. 7 shows a method 70 of calibrating an in-wall speaker using a peak of a nearfield response as determined with a series resistor. The method 70 is similar to the other methods described herein and the related description may be referenced, with like numerals denoting like components. Redundant description is omitted for sake of clarity.

At block 72, a nearfield response of a speaker 10 installed in a cavity 14 of a wall 12 is measured while the speaker 10 is driven without a resistor 60 in series. At block 74, a nearfield response of the speaker 10 is measured while the speaker 10 is driven with the resistor 60 in series.

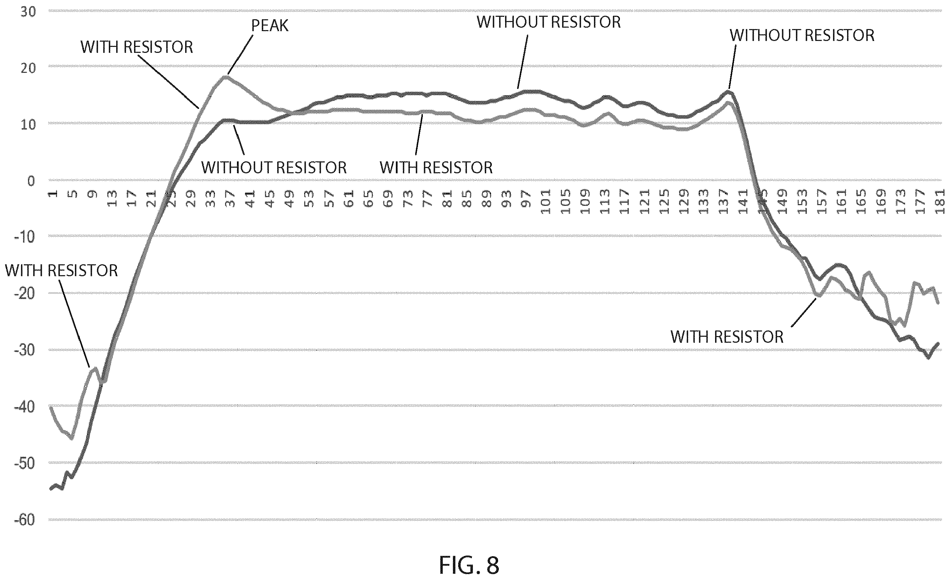

The nearfield responses may be analyzed to determine a peak value, at block 76. As shown in FIG. 8, the peak may be identifiable in the resistive nearfield response, and particularly identifiable with respect to the non-resistive nearfield response. A difference between the two nearfield measurements may be used to reduce or eliminate any small influence of the room to allow for higher accuracy in the determination of the frequency of the peak value.

Then, at block 56, the resonant frequency may be determined by taking the peak value as the resonant frequency. Then, at block 36, the resonant frequency is used to apply an equalization to the speaker 10 to match a designed reference response.

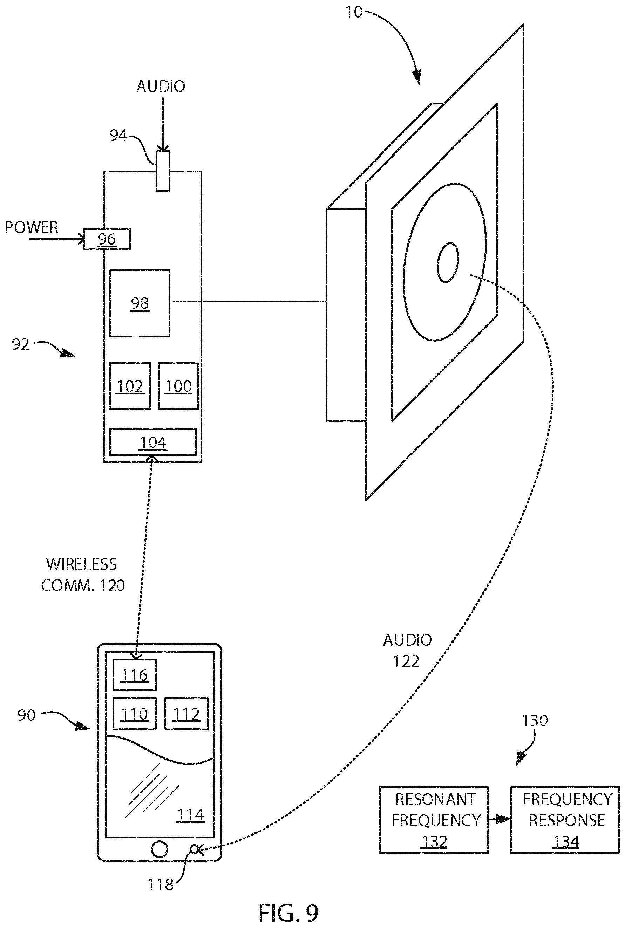

FIG. 9 shows an in-wall speaker 10 and wireless mobile device 90 that provides a microphone to carry out the techniques described herein.

In this embodiment, the speaker 10 is a subwoofer. In other embodiments, one or a combination of speakers, such as subwoofers, midrange drivers, tweeters, etc., may be used. A speaker 10 may be a separate device or may be integrated with an amplifier, a pre-amplifier, a tuner, a media player (e.g., streaming, CD, DVD, etc.), a turntable, an A/V receiver, a display device, a television, and similar components.

The speaker 10 may include various elements for converting electrical signals to audio, such as a voice coil, a magnet, and a cone. The speaker 10 may include other elements such as a frame, a surround, a spider, a dust cap, top/bottom plates, and the like. The speaker 10 is configured to be installed within a wall of a room.

In this embodiment, an external audio component 92, such as an amplifier, provides audio signals to the speaker 10. In other embodiments, such a component may be integrated with speaker 10, as mentioned.

The component 92 may include an audio input 94, a power connector 96, one or more amplifiers 98, non-volatile memory 100 (e.g., flash memory or similar), and a controller 102. The audio input 94 provides audio signals to the amplifier 98, which in turn provides amplified audio signals to the speaker 10. The power connector 96 is for supplying wall power to the component 92 and may additionally or alternatively include one or more batteries located in component 92. The non-volatile memory 100 may store settings, calibration values, and other information for use by the controller 102.

The controller 102 may be a microcontroller, a central-processing unit (CPU), a programmable logic gate array (e.g., an FPGA), a fixed logic gate array, or similar.

The component 92 may further include a wireless personal area network interface 104 connected to the controller 102. In this embodiment, the wireless personal area network interface 104 is selected for short-range (e.g., < 50 m) and low-power wireless communications. As such, the wireless personal area network interface 104 can include a Bluetooth™ Low Energy (BLE) interface, which may also be termed a BTLE, Bluetooth 4.0, or Bluetooth Smart interface.

The wireless mobile device 90 may include a handheld portable device, such as a smartphone, tablet computer, or similar. In this embodiment, the wireless mobile device 90 is of a kind capable of installing and executing applications. The wireless mobile device 90 may be an iPhone™, iPad™, Android™ phone, Android™ tablet, BlackBerry™ device, or the like.

The wireless mobile device 90 includes, among other components, a processor 110, memory 112, a display 114, a wireless personal area network interface 116, and a microphone 118. The processor 110 and memory 112 are capable of storing and executing various applications. The wireless personal area network interface 116 is configured for bidirectional wireless communications 120 with the like interface 104 at the audio component 92. The wireless personal area network interface 116 may be the same type of Bluetooth interface as the interface 104. The microphone 118 is connected to the processor 110 and is capable of capturing audio from the vicinity of the wireless mobile device 90, such as audio 122 outputted by the speaker 10, and converting captured audio to electrical signals.

An application executed by the wireless mobile device 90 can be used to control settings and other features of the audio component 92 via bidirectional wireless communications 120 realized by the wireless personal area network interfaces 104, 116.

The microphone 118 of the wireless mobile device 90 is designed for functions of the wireless mobile device 90, such as telephone calls, recording videos, recording voice memos, and similar. From the perspective of the audio component 92, the characteristics of the microphone 118 of the wireless mobile device 90 are unknown. This is particularly so because the wireless mobile device 90 and the microphone 118 each may be made by a variety of different manufacturers.

An in-wall calibration described elsewhere herein may be implemented by the controller 102 of the audio component 92, by the processor 110 of the wireless mobile device 90, or by both the controller 102 and processor 110 working in cooperation. The in-wall calibration may be implemented with instructions at a non-transitory computer-readable medium of the audio component 92, the wireless mobile device 90, or both. An application on the wireless mobile device 90 may provide functionality, including user direction, to implement the calibration. The speaker 10 may be controlled to emit the required sounds. Further, a switch may be controlled to selectively place a resistor is series with the speaker 10.

A correlation 130 of resonant frequency 132 to frequency response 134 may be stored at the stored at the audio component 92, the wireless mobile device 90, or both. The correlation 130 may take the form of a lookup table, function, algorithm, or similar. The correlation 130 may be used to convert a measured resonant frequency 132 to a target frequency response 134. The obtained frequency response 134 may be used to implement an equalization for the speaker 10. The equalization may be stored at the non-volatile memory 100 of the audio component 92.

Further, the controller 102 of the audio component 92, the processor 110 of the wireless mobile device 90, or both the controller 102 and processor 110 working in cooperation may implement a room correction calibration with near and far measurements.

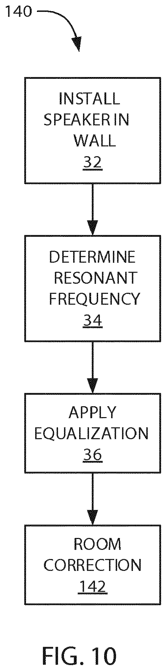

The above-described techniques for correcting the response of an in-wall loudspeaker may be used independent of or with a room correction process. A process with room correction is shown in FIG. 10 and an example of room correction is described in US Patent 9,516,444, which is incorporated herein by reference. The techniques discussed herein may provide for a consistent performance level for an in-wall loudspeaker, regardless of what method may or may not be used for room correction.

FIG. 10 shows a method 140 of calibrating an in-wall speaker with room correction. The method 140 is similar to the other methods described herein and the related description may be referenced, with like numerals denoting like components. Redundant description is omitted for sake of clarity.

At block 32, a speaker 10 is installed in a cavity 14 of a wall 12 of a room 20. At block 34, a resonant frequency of the speaker 10 is determined after the speaker 10 is installed in the wall 12. Any of the techniques discussed above may be used to obtain the resonant frequency, such as the use of constant current (via a series resistor) or minimum current draw. Next, at block 36, the resonant frequency is used to apply an equalization to the speaker 10 to match a designed reference response. Then, at block 142, a room correction process may be performed. Near and far field measurements within the room 20 may be obtained, so that the effect of the room 20 on speaker performance can be corrected.

In view of the above, it should be apparent that a calibrated microphone is no longer required to calibrate in-wall speakers. Further, a speaker cavity within a wall need not be built to known dimensions or a purpose-build containment box for the speaker need not be provided. The speaker is simpler to install and the calibration accounts for unknown cavity volume and other properties.

The scope of the claims should not be limited by the above examples, but should be given the broadest interpretation consistent with the description as a whole.

## Claims

1. A method for calibrating an in-wall speaker, the method comprising:
determining a resonant frequency of speaker when the speaker is installed in a wall; and
using the resonant frequency to apply an equalization to the speaker to match a designed reference response.

2. The method of claim 1, wherein the determining comprises measuring a voltage and current applied to the speaker versus frequency, and taking a frequency of minimum current draw as the resonant frequency.

3. The method of claim 1, further comprising driving the speaker using a constant current and measuring a nearfield response of the speaker while the speaker is driven under the constant current, wherein the determining comprises taking a peak value of the nearfield response as the resonant frequency.

4. The method of claim 3, wherein driving the speaker using a constant current comprises applying a signal to the speaker via a resistor.

5. The method of claim 1, further comprising measuring a nearfield response with and without a resistor in series with the speaker and using a difference between measurements with and without the resistor to determine a peak value of the nearfield response to be the resonant frequency.

6. The method of claim 1, using a lookup table to correlate resonant frequency to frequency response.

7. The method of claim 1, further comprising performing an in-room calibration correct for influence in a room defined by the wall.

8. A device configured to perform the method of any one of claims 1 to 7.
